# EUROPEAN PATENT APPLICATION

(11) **EP 4 782 236 A1**
(43) Date of publication of application: **29.07.2026**
(21) Application number: 26153155.2
(22) Date of filing: 21.01.2026
(51) Int. Cl.: B60H 1/00

(54) **AIR DISTRIBUTION SYSTEM, AIR CONDITIONING SYSTEM AND VEHICLE**

(30) Priority: 27.01.2025 CN 202510126018
(71) Applicant: Valeo Automotive Air Conditioning Hubei Co., Ltd., Jingzhou, Hubei 434007 (CN)
(72) Inventor: Tao, Bao, Shashi, 434007 (CN); WANG, Zijun, Shashi, 434007 (CN); XIAO, Yu, Shashi, 434007 (CN)
(74) Representative: Valeo Powertrain Systems

(57) **Abstract**

The present disclosure proposes an air distribution system, comprising a housing (1); and a heat exchanger, which is arranged inside the housing (1), wherein the housing (1) has a dividing wall (10), the dividing wall (10) being arranged to divide a space inside the housing (1) into a first space (11) and a second space (12), wherein the air distribution system further comprises: a mixing flap (2), which is arranged in the first space (11), and is configured to adjust amounts of airflows that pass through and bypass the heat exchanger; a defrosting priority flap (3), which is arranged at the dividing wall (10) and downstream of the heat exchanger, the defrosting priority flap (3) adjusting an amount of an airflow that flows from the first space (11) to the second space (12); and a drive assembly (4), which is respectively coupled to the mixing flap (2) and the defrosting priority flap (3), to respectively drive the mixing flap (2) and the defrosting priority flap (3) at different moments.

## Description

### Technical Field

The present disclosure relates to an air distribution system, an air conditioning system and a vehicle.

### Background Art

The typical structure of an air conditioning system of a vehicle may comprise an air conditioner compressor, a condenser, a condenser cooling fan, an expansion valve, an evaporator and a blower and related gas flow paths. A working principle thereof is: filling refrigerant in a closed system, the refrigerant circulating under the effect of the compressor, and being liquefied from a gas state to a liquid state by the condenser of the engine compartment, emitting heat, then evaporating from a liquid state to a gas state in the vehicle, absorbing heat, thereby lowering the temperature in the vehicle. If cold and humid air blown from the evaporator is blown directly onto a person's body, then the person will feel uncomfortable. Hence, the air must be controlled, the temperature, humidity and direction thereof being controlled, that is by an air conditioning device in an automobile air conditioning system, also called an air distribution system.

In a conventional air distribution system, different temperatures and humidities of the air respectively flowing out of different outlets, such as a front face-blowing outlet and a front feet-blowing outlet, may be maintained by an internal structure of the air distribution system. The air distribution system has multiple flaps; changing opening degrees of these flaps can change a flow direction of air in the air distribution system, and inner and outer circulation and air direction adjustment of an automobile air conditioning system are controlled by the opening degrees of these flaps. However, in the prior art, these flaps have respective drive mechanisms, and cooperation of these drive mechanisms lacks precision, such that the temperature of the air that flows out from the air conditioning system fluctuates.

Therefore, an air distribution system with superior performance is needed.

### Summary of the Invention

An objective of the present disclosure is to at least solve the defects present in the prior art, the present disclosure proposing an air distribution system, comprising a housing, constructed to allow an airflow to pass through; and a heat exchanger, which is arranged inside the housing, wherein the housing has a dividing wall, the dividing wall being arranged to divide a space inside the housing into a first space and a second space, wherein the air distribution system further comprises: a mixing flap, which is arranged in the first space, and is configured to adjust amounts of airflows that pass through and bypass the heat exchanger; a defrosting priority flap, which is arranged at the dividing wall and downstream of the heat exchanger, the defrosting priority flap adjusting an amount of an airflow that flows from the first space to the second space; and a drive assembly, which is respectively coupled to the mixing flap and the defrosting priority flap, to respectively drive the mixing flap and the defrosting priority flap at different moments.

For example, according to some embodiments of the present disclosure, movement of the drive assembly by one stroke in a first direction causes the mixing flap to change from being closed at an initial position of the stroke to being fully open, and then changing to being closed at an end of the stroke.

For example, according to some embodiments of the present disclosure, the defrosting priority flap changes from being closed at an initial position of the stroke to being fully open, and then changes to being partially open at an end of the stroke.

For example, according to some embodiments of the present disclosure, the drive assembly is configured such that, during the process of moving by one stroke in a first direction, the drive assembly drives the mixing flap to start to open after the defrosting priority flap is fully open.

For example, according to some embodiments of the present disclosure, when the mixing flap is closed, all of the airflow that flows through the mixing flap bypasses the heat exchanger, and, when the mixing flap is fully open, all of the airflow that flows through the mixing flap passes through the heat exchanger.

For example, according to some embodiments of the present disclosure, when the defrosting priority flap is fully open, airflows of the first space and the second space do not circulate at the defrosting priority flap, and, when the defrosting priority flap is partially open, the airflow of the first space is able to flow into the second space at the defrosting priority flap.

For example, according to some embodiments of the present disclosure, the drive assembly is configured such that, during the process of moving by one stroke in a first direction, the drive assembly drives the mixing flap from being closed to being fully open after the defrosting priority flap is fully open.

For example, according to some embodiments of the present disclosure, the drive assembly is configured such that, during the process of moving by one stroke in a first direction, the drive assembly drives the defrosting priority flap from being fully open to being partially open after the mixing flap is fully open.

For example, according to some embodiments of the present disclosure, the drive assembly is configured such that, during the process of moving by one stroke in a first direction, the drive assembly drives the mixing flap from being fully open to being closed after the defrosting priority flap pivots from being fully open to a partially open state.

For example, according to some embodiments of the present disclosure, the drive assembly comprises a cam mechanism, a cam cooperating profile of the cam mechanism controlling opening degrees of the mixing flap and the defrosting priority flap.

For example, according to some embodiments of the present disclosure, the cam mechanism comprises a first cam cooperating profile and a second cam cooperating profile that are fixedly connected, to respectively control opening degrees of the mixing flap and the defrosting priority flap.

The present disclosure further proposes an air conditioning system, comprising the air distribution system according to embodiments of the present disclosure.

The present disclosure further proposes a vehicle, comprising the air conditioning system according to embodiments of the present disclosure.

### Brief Description of the Drawings

Fig. 1 shows a three-dimensional view of a portion of an air distribution system according to an embodiment of the present disclosure;
Fig. 2 shows a drawing of curves of corresponding relationships between a stroke of a drive assembly of an air distribution system and a mixing flap and a defrosting priority flap according to an embodiment of the present disclosure;
Fig. 3 shows a planar schematic view of a portion of an air distribution system according to an embodiment of the present disclosure, wherein a mixing flap is in a fully open state and the defrosting priority flap is not fully open;
Fig. 4 shows a planar schematic view of a portion of an air distribution system according to an embodiment of the present disclosure, wherein a mixing flap is in a fully closed state and the defrosting priority flap is not fully open;
Fig. 5 shows a planar schematic view of a portion of an air distribution system according to an embodiment of the present disclosure, wherein a mixing flap is in a fully open state and the defrosting priority flap is fully open;
Fig. 6 shows an enlarged three-dimensional view of a drive assembly according to an embodiment of the present disclosure.

### Reference signs

1 housing,
10 dividing wall,
11 first space,
12 second space,
13 heat exchanger accommodating slot,
2 mixing flap,
3 defrosting priority flap,
4 drive assembly,
41 cam mechanism,
411 first cam cooperating profile,
412 second cam cooperating profile,
421 first transmission assembly,
422 second transmission assembly,
51 first outlet,
52 second outlet,
53 third outlet,
54 fourth outlet

### Detailed Description of the Invention

To make the objective, technical solutions and advantages of the present disclosure clearer, the technical solutions of embodiments of the present disclosure will be described clearly and completely below with reference to the drawings of specific embodiments of the present disclosure. Unless otherwise specified, the terms used herein have common meanings in the art. In the drawings, identical reference numerals denote identical components.

Note that in the description of the present disclosure, unless otherwise expressly specified and defined, the terms "mount", "interconnect" and "connect" should be understood in a broad sense, which, for example, may be a fixed connection, a detachable connection or an integrated connection; a mechanical connection or an electrical connection; a direct connection, an indirect connection through an intermediate medium or a connection inside two elements. Those of ordinary skill in the art may understand the specific meanings of the abovementioned terms in the present disclosure according to the specific situation.

In the description of the present disclosure, the terms "upstream" and "downstream" denote sequential order in a flow direction of gas.

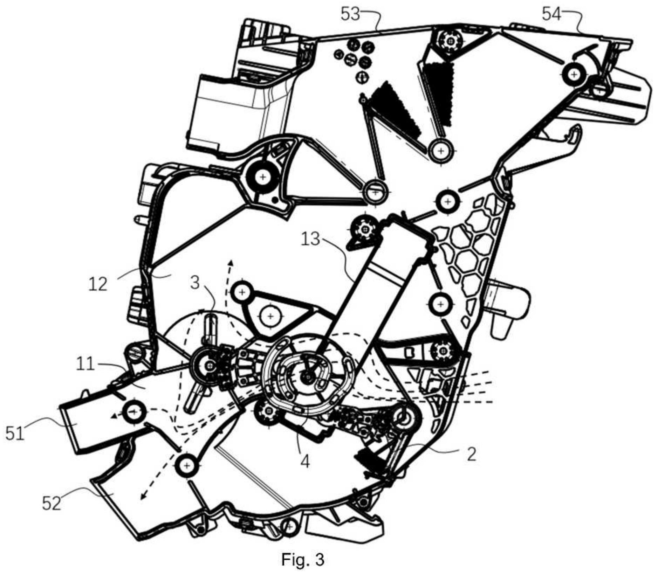

The present disclosure proposes an air distribution system, which may be used for guiding different airflows through different components (such as a heat exchanger), and may obtain required airflows by mixing airflows of different temperatures and humidities in different proportions, and finally guides the obtained different airflows to different outlets to flow out. Thus, the air distribution system according to the present disclosure may comprise multiple different outlets, such as the first outlet 51, the second outlet 52, the third outlet 53 and the fourth outlet 54, etc. shown in Fig. 3. These outlets lead to different places and have different functions; for example, the first outlet 51 may be used for blowing on feet in a back seat of a vehicle, the second outlet 52 may be used for blowing on a face in the back seat of the vehicle, the third outlet 53 may be used for blowing on a face in a front seat of the vehicle, and the fourth outlet 54 may be used for defrosting the vehicle.

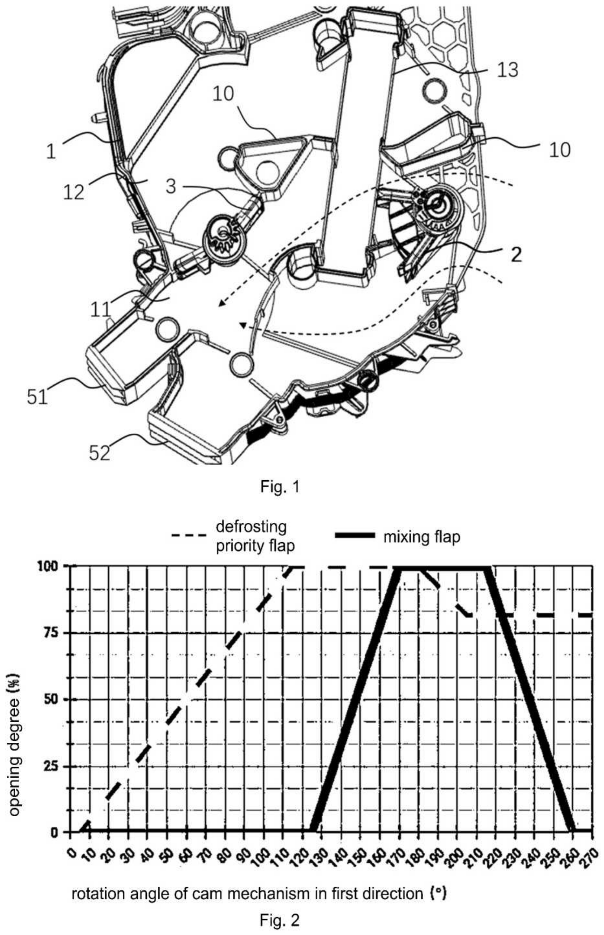

Therefore, for better management planning for different outlets, taking the air distribution system according to the present disclosure shown in Fig. 1 as an example, at least a portion of the interior of the housing 1 of the air distribution system is divided into two partitioned spaces. As shown in Figs. 1 and 3, the space of the housing is divided by a dividing wall 10 on the housing 1 into a first space 11 and a second space 12, and in particular, the first space 11 is connected to the first outlet 51 and the second outlet 52, and the second space 12 is connected to the third outlet 53 and the fourth outlet 54.

The air distribution system according to the present disclosure further may comprise a heat exchanger (not shown); Fig. 1 only shows a heat exchanger accommodating slot 13 for fixedly mounting this heat exchanger, a profile of the heat exchanger matching the heat exchanger accommodating slot 13, and the heat exchanger being hidden in order to clearly show other structures (especially the drive assembly). Particularly as shown in Fig. 1, the heat exchanger accommodating slot 13 is arranged in the middle of the dividing wall 10, such that the heat exchanger may span the first space 11 and the second space 12, that is, a portion of the heat exchanger being respectively arranged in the first space 11 and the second space 12. For example, the heat exchanger may be a heater, used for heating an airflow that passes through the heat exchanger. The dotted arrows shown in Figs. 1 and 3 to 5 all represent an airflow path, and the dotted arrows that pass through the heat exchanger accommodating slot 13 all represent this airflow being heated when passing through the heat exchanger.

As shown in Fig. 1, the air distribution system according to the present disclosure further comprises a mixing flap 2 and a defrosting priority flap 3; these two flaps may be driven to open/close by different degrees to change a flow direction of an airflow.

Specifically, the mixing flap 2 may be arranged in the first space 11, and in particular may be arranged upstream of the heat exchanger as shown in Fig. 1. Thus, the mixing flap 2 may be configured to regulate an amount of an airflow that passes through the heat exchanger; in addition, the mixing flap 2 may also be configured to simultaneously regulate an amount of an airflow that bypasses the heat exchanger. Specifically, the mixing flap 2 may be arranged at the centre of two airflows, one airflow flowing into the heat exchanger, and the other airflow bypassing the heat exchanger; the mixing flap 2 has just the right size to be able to block one airflow and can pivot between a closed position and a fully open position.

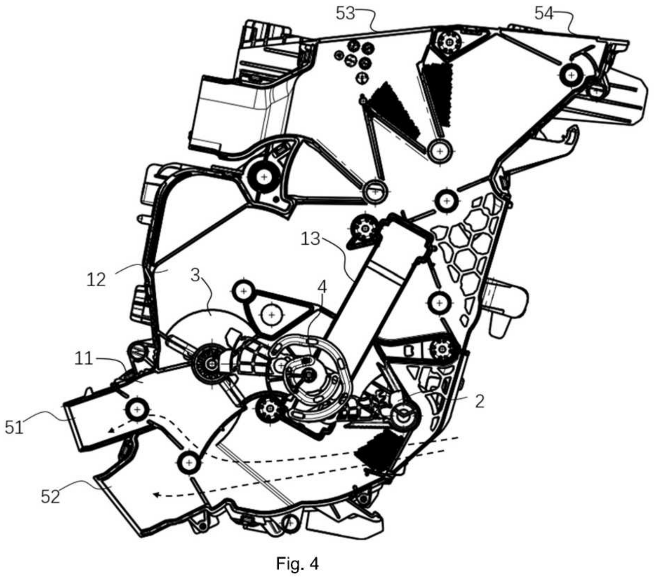

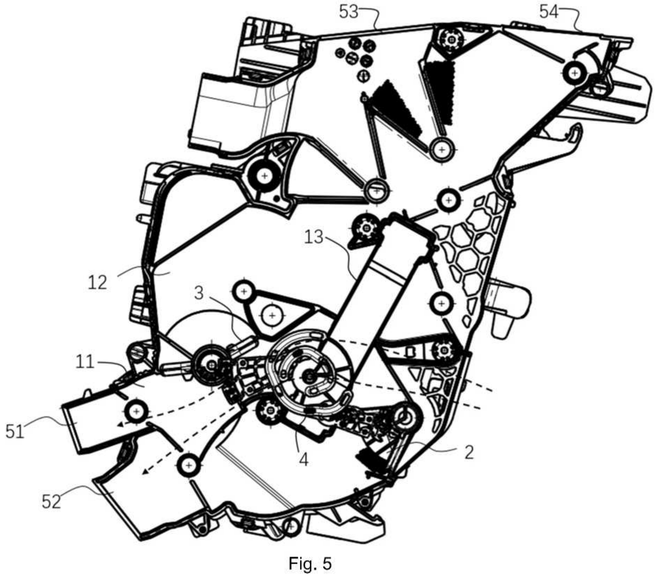

In the fully open position (as shown in Figs. 3 and 5), the mixing flap 2 may block a flow path that bypasses the heat exchanger and fully open a flow path that flows into the heat exchanger, such that all of the airflow that passes through the mixing flap 2 subsequently passes through the heat exchanger. In the closed position (as shown in Fig. 4), the mixing flap 2 may block the flow path that flows into the heat exchanger and fully open the flow path that bypasses the heat exchanger, such that all of the airflow that passes through the mixing flap 2 bypasses the heat exchanger. In a not fully open position between the fully open position and the closed position, as shown in Fig. 1, the flow path that flows into the heat exchanger and the flow path that bypasses the heat exchanger are both partially open, such that an airflow that passes through the mixing flap 2 splits into two streams, one stream being heated by the heat exchanger, and the other stream bypassing the heat exchanger and maintaining its original temperature, and the two streams can re-converge and mix downstream of the heat exchanger, and finally flow out from the first outlet 51 and the second outlet 52. Therefore, by means of adjusting the opening degree of the mixing flap 2, flow rates of the two streams can be changed, and hence the temperature of the mixed airflow is changed.

The defrosting priority flap 3 may be arranged at the dividing wall 10, and in particular, may be arranged downstream of the heat exchanger. The defrosting priority flap 3 likewise may be configured to pivotally move, to pivot between a closed position and a fully open position. When the defrosting priority flap 3 is fully open, as shown in Figs. 1 and 5, the defrosting priority flap 3 and the housing 1 cooperate, such that airflows of the first space 11 and the second space 12 do not circulate at the defrosting priority flap 3. When the defrosting priority flap 3 is closed, as shown in Fig. 4, it causes all of the airflow that passes through the heat exchanger in the first space 11 to flow into the second space 12, and not flow into the first outlet 51 and the second outlet 52. When the defrosting priority flap 3 is not fully open, as shown in Fig. 3, the airflow of the first space 11 may flow at the defrosting priority flap 3 into the second space 12, and the heated airflow that passes through the heat exchanger in the first space 11 may flow into the first outlet 51 and the second outlet 52.

The air distribution system according to the present disclosure may comprise multiple modes, such as an all-cold face-blowing mode, an all-hot defrosting mode, a face-blowing defrosting mode, a feet-blowing mode, a feet-blowing defrosting mode, a face-blowing feet-blowing defrosting mode and a face-blowing feet-blowing mode, etc. Each mode requires a respective specific opening degree or specific opening degree range of the mixing flap 2 and the defrosting priority flap 3. The drive assembly 4 according to the present disclosure may drive the mixing flap 2 and the defrosting priority flap 3 to a combination of specific opening degrees to satisfy the requirements of different modes.

Since the two flaps can both move, for example when switching modes, if the two flaps both move, the airflows in the air distribution system have multiple flow directions, and the opening degrees of the two flaps simultaneously change the amounts of cold air and hot air, such that the amounts of cold air and hot air in this situation change irregularly and the two mix in a disorderly manner; the temperature is unstable in this state, the temperature fluctuating and even suddenly changing, and thus a longer time is required to achieve a blowing effect required by a user, worsening the user experience. Therefore, it is necessary to control the two flaps to avoid the situation in which the two flaps move simultaneously.

According to an embodiment of the present disclosure, a drive assembly 4 is proposed; the drive assembly 4 may be respectively coupled to a mixing flap 2 and a defrosting priority flap 3, to respectively drive the mixing flap 2 and the defrosting priority flap 3 at different moments, such that both the mixing flap 2 and the defrosting priority flap 3 do not act simultaneously. Thus, each time only one flap acts, which can greatly reduce temperature fluctuations, preventing two flaps from simultaneously affecting a change in temperature, avoiding a sudden change in temperature.

Furthermore, the configuration shown in Fig. 2 can further be performed with the drive assembly 4, Fig. 2 showing the drive assembly 4 driving in a stroke of movement in a first direction, such that the mixing flap 2 and the defrosting priority flap 3 respectively open/close by different degrees, specifically the mixing flap 2 changing from being closed to being fully open and then closed, and the defrosting priority flap 3 changing from being closed to being fully open and then partially open. In particular, as shown in Fig. 2, in an initial stage of this stoke in the first direction, the mixing flap 2 and the defrosting priority flap are both closed, and, in an end stage of this stroke in the first direction, the mixing flap 2 is fully open and the defrosting priority flap 3 is partially open. As shown in Fig. 2, it can be seen that the mixing flap 2 and the defrosting priority flap 3 do not have a change in opening degree simultaneously; that is, the two do not act simultaneously.

Specifically, the drive assembly 4 may be configured such that, in the stroke of movement in the first direction, the drive assembly 4 causes the defrosting priority flap 3 to first change from being closed to being fully open, and, after the defrosting priority flap 3 is fully open (especially after a certain stroke), the drive assembly starts to drive the mixing flap 2 to gradually open, in particular changing from being closed to being fully open. In addition, the drive assembly 4 may be further configured such that, in the stroke of movement in the first direction, after the mixing flap 2 is fully open, the drive assembly 4 drives the defrosting priority flap 3 to change from being fully open to partially open and maintaining an opening degree of 80%, for example. Moreover, after the defrosting priority flap 3 changes from being fully open to having and maintaining an unchanging specific opening degree, the mixing flap 2 is driven to change to being closed.

The drive assembly according to the present disclosure in particular may move in the first direction and may move in reverse in a second direction opposite to the first direction, such that the opening degrees of the two flaps switch and change by free cooperation thereof, to satisfy different mode requirements, and switch back and forth in different modes. The sequential movement relationship of the two flaps in the present disclosure can change according to different mode requirements, as long as the two flaps can be driven to the required opening degrees while ensuring the two do not move simultaneously.

For example, the air distribution system according to the present disclosure may comprise an all-cold face-blowing mode, this mode, for example, requiring that no hot air flows into the first outlet 51 and the second outlet 52, therefore requiring that the mixing flap 2 and the defrosting priority flap 3 are both closed (as shown in Fig. 4), that is, for example, corresponding to the situation shown in Fig. 2 when the drive assembly (e.g. the cam mechanism 41) has moved by 0° - 5° in the first direction. The air distribution system according to the present disclosure may comprise an all-hot defrosting mode, this mode, for example, requiring that hot air flows into the first outlet 51 and the second outlet 52 and requiring that hot air of the first space 11 flows into the second space 12 to assist with defrosting, therefore requiring the mixing flap 2 to be fully open and the defrosting priority flap 3 to be partially open (as shown in Fig. 2), that is, for example, corresponding to the situation shown in Fig. 2 when the cam mechanism 41 has moved by 260° - 270° in the first direction. The air distribution system according to the present disclosure may further comprise a face-blowing defrosting mode, a feet-blowing mode, a feet-blowing defrosting mode, a face-blowing feet-blowing defrosting mode and a face-blowing feet-blowing mode; in these modes, for example, the defrosting priority flap 3 must be fully open (as shown in Fig. 5), and the opening degree of the mixing flap 2 changes and regulates temperature, that is, for example, corresponding to the cam mechanism 41 moving by 120° - 170° in the first direction in Fig. 2. These modes described above further relate to other types of cooperation between flaps, which are not elaborated on in the present disclosure.

For example, the drive assembly according to the present disclosure may comprise a cam mechanism 41, this cam mechanism 41 having a cam cooperating profile, which is able to control the opening degrees of the mixing flap 2 and the defrosting priority flap 3. In particular, changing the opening/closing of the two flaps is controlled by one cam mechanism 41, and the mechanical structure is stable and reliable; moreover, this cam mechanism 41 can be controlled by means of one electric motor, and controlling two flaps with a single electric motor is advantageous for reducing costs and reducing the space occupied by the drive assembly.

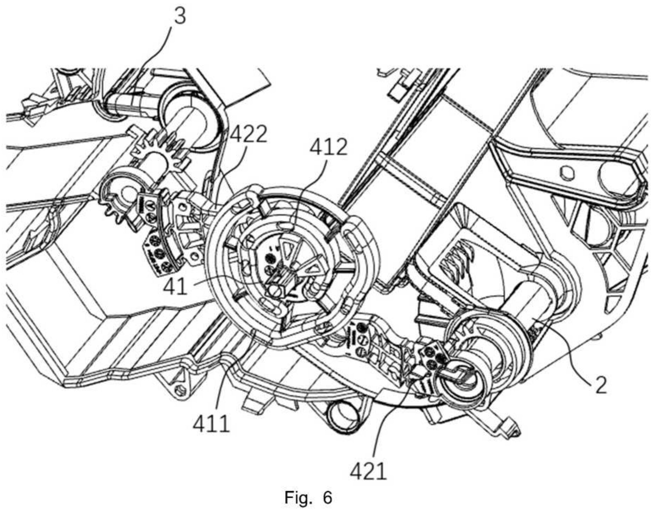

Specifically, as shown in Fig. 6, the cam mechanism 41 may comprise a first cam cooperating profile 411 and a second cam cooperating profile 412 that are fixedly connected; the first cam cooperating profile 411 and the second cam cooperating profile 412 may respectively cooperate with a first transmission assembly 421 and a second transmission assembly 422, to respectively control the opening degrees of the mixing flap 2 and the defrosting priority flap 3. For example, the first transmission assembly 421 and the second transmission assembly 422 may comprise a connecting rod structure or a gear structure, etc. to implement transmission; the present disclosure imposes no restrictions.

Furthermore, the present disclosure further comprises an air conditioning system; this air conditioning system may comprise an air conditioner compressor, a condenser, a condenser cooling fan, an expansion valve, an evaporator and a blower and related gas flow paths, etc. (not shown). A working principle thereof is: filling refrigerant in a closed system, the refrigerant circulating under the effect of the compressor, and being liquefied from a gas state to a liquid state by the condenser of the engine compartment, emitting heat, then evaporating from a liquid state to a gas state in the vehicle, absorbing heat, thereby lowering the temperature in the vehicle. The air conditioning system according to the present disclosure may comprise the abovementioned air distribution system according to the present disclosure; this air distribution system may guide a cooled airflow to the mixing flap 2, and, as described above, a portion of cooling airflow separated according to the opening degree of the mixing flap 2 flows through the heat exchanger, and, after being heated, mixes with the other portion of the cooling airflow, and further may have different flow directions controlled by the defrosting priority flap 3 and other flaps, to obtain the required airflow for achieving different objectives.

Furthermore, the present disclosure further proposes a vehicle (not shown), which may be, for example, a saloon, a sports car, an SUV, a bus, a truck, a trailer, a special-purpose vehicle, a motorcycle, etc. This vehicle may comprise the air conditioning system described above.

It should be understood that the above description has an explanatory rather than restrictive purpose. For example, the above embodiments (and/or aspects thereof) may be used in combination with each other. In addition, without departing from the scope of the present disclosure, multiple amendments may be performed to adapt specific situations or materials to the teachings of the present disclosure. The functions and performance of various elements or modules described herein are only provided for explanation and are by no means restrictive, being rather only exemplary embodiments. After reading the above description, many other embodiments and amendments within the spirit and scope of the claims would be obvious to a person skilled in the art. Therefore, the scope of the present disclosure should be determined with reference to the whole scope of the attached claims and equivalents as granted by the claims.

In the attached claims, the terms "comprise" and "wherein" are used as simple English equivalents of the corresponding terms "include" and "in which". In addition, in the following claims, the terms "first", "second" and "third", etc. only act as labels, and do not count as applying a numerical value requirement on the target thereof.

## Claims

1. Air distribution system, comprising
a housing (1), which is constructed to allow an airflow to pass through;
and a heat exchanger, which is arranged inside the housing (1),
wherein the housing (1) has a dividing wall (10), the dividing wall (10) being arranged to divide a space inside the housing (1) into a first space (11) and a second space (12),
wherein the air distribution system further comprises:
a mixing flap (2), which is arranged in the first space (11), and is configured to adjust amounts of airflows that pass through and bypass the heat exchanger;
a defrosting priority flap (3), which is arranged at the dividing wall (10) and downstream of the heat exchanger, the defrosting priority flap (3) adjusting an amount of an airflow that flows from the first space (11) to the second space (12);
and a drive assembly (4), which is respectively coupled to the mixing flap (2) and the defrosting priority flap (3), to respectively drive the mixing flap (2) and the defrosting priority flap (3) at different moments.

2. Air distribution system according to Claim 1, wherein
movement of the drive assembly (4) by one stroke in a first direction causes the mixing flap (2) to change from being closed at an initial position of the stroke to being fully open, and then changing to being closed at an end of the stroke.

3. Air distribution system according to Claim 1 or 2, wherein
movement of the drive assembly (4) by one stroke in a first direction causes the defrosting priority flap (3) to change from being closed at an initial position of the stroke to being fully open, and then changing to being partially open at an end of the stroke.

4. Air distribution system according to Claim 1 or 2, wherein
the drive assembly (4) is configured such that, during the process of moving by one stroke in a first direction, the drive assembly (4) drives the mixing flap (2) to start to open after the defrosting priority flap (3) is fully open.

5. Air distribution system according to Claim 2, wherein,
when the mixing flap (2) is closed, all of the airflow that flows through the mixing flap (2) bypasses the heat exchanger, and, when the mixing flap (2) is fully open, all of the airflow that flows through the mixing flap (2) passes through the heat exchanger.

6. Air distribution system according to Claim 5, wherein,
when the defrosting priority flap (3) is fully open, airflows of the first space (11) and the second space (12) do not circulate at the defrosting priority flap (3), and, when the defrosting priority flap (3) is partially open, the airflow of the first space (11) is able to flow into the second space (12) at the defrosting priority flap (3).

7. Air distribution system according to Claim 3, wherein
the drive assembly (4) is configured such that, during the process of moving by one stroke in a first direction, the drive assembly (4) drives the mixing flap (2) from being closed to being fully open after the defrosting priority flap (3) is fully open.

8. Air distribution system according to Claim 7, wherein
the drive assembly (4) is configured such that, during the process of moving by one stroke in a first direction, the drive assembly (4) drives the defrosting priority flap (3) from being fully open to being partially open after the mixing flap (2) is fully open.

9. Air distribution system according to Claim 8, wherein
the drive assembly (4) is configured such that, during the process of moving by one stroke in a first direction, the drive assembly (4) drives the mixing flap (2) from being fully open to being closed after the defrosting priority flap (3) changes from being fully open to a partially open state.

10. Air distribution system according to Claim 2, wherein
the drive assembly (4) comprises a cam mechanism (41), a cam cooperating profile of the cam mechanism (41) controlling opening degrees of the mixing flap (2) and the defrosting priority flap (3).

11. Air distribution system according to Claim 10, wherein
the cam mechanism (41) comprises a first cam cooperating profile (411) and a second cam cooperating profile (412) that are fixedly connected, to respectively control opening degrees of the mixing flap (2) and the defrosting priority flap (3).

12. Air conditioning system, comprising
the air distribution system according to any one of Claims 1 - 11.

13. Vehicle, comprising
the air conditioning system according to Claim 12.
